# EUROPEAN PATENT APPLICATION

(11) **EP 4 488 859 A1**
(43) Date of publication of application: **08.01.2025**
(21) Application number: 22929867.4
(22) Date of filing: 04.03.2022
(51) Int. Cl.: G06F 21/32, G06F 21/62

(54) **AUTHENTICATION SYSTEM AND AUTHENTICATION METHOD**

(71) Applicant: Hitachi, Ltd., Tokyo 100-8280 (JP)
(72) Inventor: GOSSAMSETTI Guna Surendra, Tokyo 100-8280 (JP); OHNUMA Ryuta, Tokyo 100-8280 (JP)
(74) Representative: MERH-IP Matias Erny Reichl Hoffmann Patentanwälte PartG mbB
(86) International application number: PCT/JP2022/009485
(87) International publication number: WO 2023/166723

(57) **Abstract**

An authentication system that enables accurate task management of an employee in an office is disclosed. The authentication system authenticates a usage authority of a plurality of terminal devices (20) provided in an office and configured to access a management system. The authentication system includes a biometric information input device (21) provided in each of the plurality of terminal devices, a first server (30) configured to authenticate, based on biometric information input to the terminal device from the biometric information input device, an employee of the office, and a second server (40) configured to authenticate, based on a device identifier of the biometric information input device, a usage authority of the terminal device when the first server authenticates the employee. The second server creates task management data of the employee whose usage authority of the terminal device is authenticated based on the device identifier, and transmits the created task management data to a production management system (50).

## Description

### Technical Field

The present invention relates to an authentication system and an authentication method for authenticating an employee in an office such as a manufacturing factory.

### Background Art

In recent years, management systems based on computer systems have been used in many offices. A production management system used in a manufacturing factory, which is an office in the manufacturing industry, includes a production planning system, a manufacturing execution system that manages manufacturing instructions and manufacturing result records based on production plans, and a manufacturing device control system.

As a technique related to such a production management system in the related art, the technique described in PTL 1 is known. In the related art, usage rights are determined based on a user ID and a password input from a manufacturer terminal used in the production management system. If a usage right is ensured, a menu selection screen is sent to the manufacturer terminal, and the corresponding management information is searched based on search conditions input from the manufacturer terminal.

### Citation List

### Patent Literature

PTL 1: JP2004-30061A

### Summary of Invention

### Technical Problem

In fields such as pharmaceuticals, where high-quality maintenance is required for products, in addition to the management of manufacturing processes, it may be necessary to perform accurate task management of employees involved in the manufacturing processes. However, in the related art described above, since the reliability of authentication of terminal usage rights is not always sufficient, it is difficult to perform accurate task management.

Therefore, the invention provides an authentication system and an authentication method that enable accurate task management of an employee in an office such as a pharmaceutical factory.

### Solution to Problem

In order to solve the above problems, the authentication system according to the invention is a system that authenticates a usage authority of a plurality of terminal devices provided in an office and configured to access a management system, the authentication system including: a biometric information input device provided in each of the plurality of terminal devices; a first server configured to authenticate, based on biometric information input to the terminal device from the biometric information input device, an employee of the office; and a second server configured to authenticate, based on a device identifier of the biometric information input device, a usage authority of the terminal device when the first server authenticates the employee, in which the second server creates task management data of the employee whose usage authority of the terminal device is authenticated based on the device identifier, and transmits the created task management data to the management system.

In order to solve the above problems, the authentication method according to the invention is a method for authenticating a usage authority of a plurality of terminal devices provided in an office and configured to access a management system, the authentication method including: authenticating an employee of the office based on biometric information received from a biometric information input device provided in each of the plurality of terminal devices; then authenticating, based on a device identifier of the biometric information input device, the usage authority of the terminal device; and then creating task management data of the employee whose usage authority of the terminal device is authenticated based on the device identifier.

### Advantageous Effects of Invention

According to the invention, it is possible to perform accurate task management of an employee in an office.

Problems, configurations, and effects other than those described above will become apparent in the following description of embodiments.

### Brief Description of Drawings

[FIG. 1] FIG. 1 is a sketch of a pharmaceutical factory to which an authentication system according to an embodiment of the invention is applied.
[FIG. 2] FIG. 2 is a block diagram showing a configuration of the authentication system according to the embodiment.
[FIG. 3] FIG. 3 is a data configuration diagram showing an example of biometric data of an employee stored in an authentication server.
[FIG. 4] FIG. 4 is a data configuration diagram showing an example of entry and exit status data.
[FIG. 5] FIG. 5 is a data configuration diagram showing an example of terminal device usage authority data.
[FIG. 6] FIG. 6 is a data configuration diagram showing an example of factory area data stored in a task server.
[FIG. 7] FIG. 7 is a data configuration diagram showing an example of process data stored in the task server.
[FIG. 8] FIG. 8 is a data configuration diagram showing an example of data of tasks each employee is in charge of.
[FIG. 9] FIG. 9 is a data configuration diagram showing an example of task management data stored in a manufacturing execution system.
[FIG. 10] FIG. 10 is a flowchart showing authentication processing in the authentication system of the embodiment.

### Description of Embodiments

Hereinafter, an embodiment of the invention will be described with reference to the accompanying drawings. In the drawings, components having the same reference numerals indicate the same components or components having similar functions. In the embodiment, an office to which an authentication system is applied is a pharmaceutical factory. In the embodiment, a management system is a production management system.

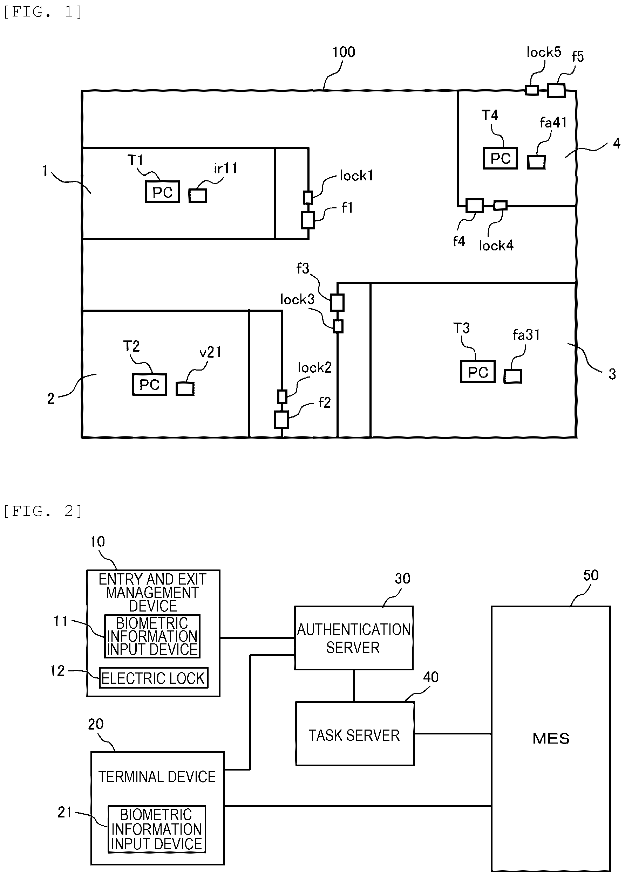

FIG. 1 is a sketch of the pharmaceutical factory to which the authentication system according to the embodiment of the invention, which will be described later, is applied.

Four areas, that is, a clean room 1, a clean room 2, a production line 3, and a staff room 4 are provided in a pharmaceutical factory 100. The main processes in the clean room 1, the clean room 2, and the production line 3 are respectively a weighing process, a preparation process, and a packaging and packing process. In the staff room 4, a management task is performed. The management task includes, for example, creating, approving, and issuing manufacturing instructions, and confirming, approving, and creating reports on manufacturing status and manufacturing results.

An entry and exit management device including a biometric information input device (f1 to f5) for biometric authentication and an electric lock (lock1 to lock5) is provided at an entrance of each of the areas. As the biometric information input device, fingerprint information input devices f1 to f5 are used.

In the area, a terminal device (T1 to T4) is installed, which is operated by an employee involved in a task and transmits and receives process management data to and from a manufacturing execution system. A personal computer (PC) is applied as the terminal device.

The terminal device includes the biometric information input device for biometric authentication. The terminal devices T1, T2, T3, and T4 each include an iris information input device ir11, a voice information input device v21, a facial information input device fa31, and a facial information input device fa41.

As the type of the biometric information input device provided in the terminal device is selected to be one that can perform authentication with high reliability, according to work clothes and protectors used by an employee in the area.

In the clean room 1, the iris information input device ir11 is applied since an employee involved in the weighing process wears dust-proof or protective clothes, a face mask, and gloves. In the clean room 2, the voice information input device v21 is applied since an employee involved in the preparation process wears dust-proof or protective clothes, a face mask, a face shield, and gloves. In the production line 3, the facial information input device fa31 is applied since an employee involved in the packaging and packing process wears a dust-proof coat and a dust-proof hat.

An employee who works in any of the areas of the clean room 1, the clean room 2, and the production line 3 enters a preparation room after being permitted to enter through fingerprint authentication at the entrance to the area. The employee wears the work clothes and protectors as described above in the preparation room and then enters the work site, and operates the terminal device and the biometric information input device provided in the terminal device. When the employee is authenticated as an employee who is authorized to work in the area through this operation, the employee can receive management data such as a work instruction from the manufacturing execution system in the production management system through the terminal device, and can input a work status and work record and transmit the work status and work result to the manufacturing execution system.

In the staff room 4, since the employee does not wear the work clothes and protectors as described above, not only the facial information input device fa41 but also various biometric information input devices can be applied.

FIG. 2 is a block diagram showing a configuration of the authentication system according to the embodiment of the invention.

An entry and exit management device 10 including a biometric information input device 11 and an electric lock 12 is provided at the entrance of each of the areas in the factory. In the present embodiment, the biometric information input device 11 corresponds to the fingerprint information input devices f1 to f5 shown in FIG. 1, and the electric lock 12 corresponds to the electric locks lock1 to lock5 shown in FIG. 1. The biometric information input device 11 is provided outside the area and in the area near the entrance.

The entry and exit management device 10 is communicably connected to an authentication server 30 implemented by a computer system. Biometric information input from the biometric information input device 11 provided in the entry and exit management device 10 is transmitted to the authentication server 30. The authentication server 30 compares the received biometric information with biometric data of an employee stored in advance in the authentication server 30, and determines whether there is biometric data that matches the received biometric information. In this way, it can be confirmed that an operator of the biometric information input device 11 is an employee of the pharmaceutical factory 100 (FIG. 1) .

When the authentication server 30 determines that there is biometric data that matches the received biometric information, the authentication server 30 transmits an unlocking command of the electric lock 12 to the entry and exit management device 10. As a result, when the electric lock 12 is unlocked, the employee can enter the area where the operated entry and exit management device 10 is provided.

When an employee exits from each of the areas, the authentication server 30 also compares the biometric information transmitted from the biometric information input device 11 with the biometric data stored in the authentication server 30 and unlocks the electric lock 12 after authenticating that the employee is an employee of the pharmaceutical factory 100.

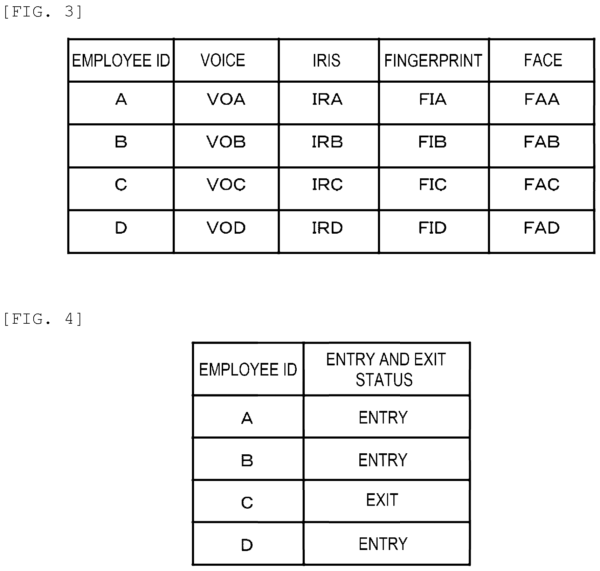

FIG. 3 is a data configuration diagram showing an example of the biometric data of an employee stored in the authentication server 30.

In the biometric data, an employee ID, which is an identifier unique to each employee, is associated with voice data, iris data, fingerprint data, and face data of the employee having the employee ID.

The authentication server 30 compares fingerprint data FIA, FIB, FIC, and FID in the biometric data with fingerprint information input to any one of the fingerprint information input devices f1 to f5, which are the biometric information input devices 11 of the entry and exit management devices 10 provided in the areas. As a result of the comparison, when the fingerprint information matches any one of the fingerprint data, the authentication server 30 authenticates that an operator of the fingerprint information input device is an employee of the pharmaceutical factory 100.

As shown in FIG. 2, the authentication server 30 is communicably connected to a task server 40 implemented by a computer system. As will be described later, the task server 40 stores data related to processes and areas where each employee can work.

The authentication server 30 transmits entry and exit status data of authenticated employees in each of the areas to the task server 40. The task server 40 stores the received entry and exit status data as task management data.

FIG. 4 is a data configuration diagram showing an example of the entry and exit status data.

The entry and exit status data includes an employee ID and an entry and exit status of an employee having the employee ID.

The authentication server 30 sets the employee ID corresponding to the biometric data that matches the biometric information from the biometric information input device 11 in the entry and exit status data.

The biometric information input device 11 has a device ID which is a unique identifier of the device. When the biometric information is transmitted from the biometric information input device 11 to the authentication server 30, the device ID is also transmitted. The authentication server 30 stores in advance data indicating a correspondence between the device ID of the biometric information input device 11 and an installation place (area and inside and outside of area). The authentication server 30 can determine, based on the received device ID, the entry and exit of an employee and an area where the employee enters or exits with reference to the data.

The authentication server 30 sets the entry and exit status (either entry or exit) determined based on the received device ID as the entry and exit status data. In addition to the employee ID and the entry and exit status, the authentication server 30 may set the area determined based on the received device ID in the entry and exit status data.

As shown in FIG. 2, a terminal device 20 installed in each of the areas includes a biometric information input device 21. The terminal device 20 is communicably connected to the authentication server 30. In the present embodiment, the terminal device 20 corresponds to the terminal devices T1, T2, T3, and T4 shown in FIG. 1. The biometric information input device 21 corresponds to the iris information input device ir11, the voice information input device v21, the facial information input device fa31, and the facial information input device fa41 shown in FIG. 1.

An employee who enters an area inputs the employee ID into the terminal device 20 and also inputs the biometric information using the biometric information input device 21. The terminal device 20 adds the device ID, which is the unique identifier of the biometric information input device 21, to the input employee ID and biometric information, and transmits the input employee ID and biometric information to the authentication server 30.

The authentication server 30 compares the received biometric information with the biometric data shown in FIG. 3 described above, and determines whether there is biometric data that matches the received biometric information. In this way, when the authentication server 30 determines that there is matching biometric data, the authentication server 30 authenticates that an operator of the biometric information input device 21 is an employee of the pharmaceutical factory 100 (FIG. 1). The authentication server 30 may compare the biometric information with only the biometric data corresponding to the received employee ID.

When the authentication server 30 authenticates the employee based on the biometric information, the authentication server 30 transmits the employee ID and the device ID of the biometric information input device 21 to the task server 40. The task server 40 determines, based on the received employee ID and device ID, whether the employee who inputs the employee ID to the terminal device 20 has a usage authority of the terminal device 20, based on terminal device usage authority data stored in advance in the task server 40.

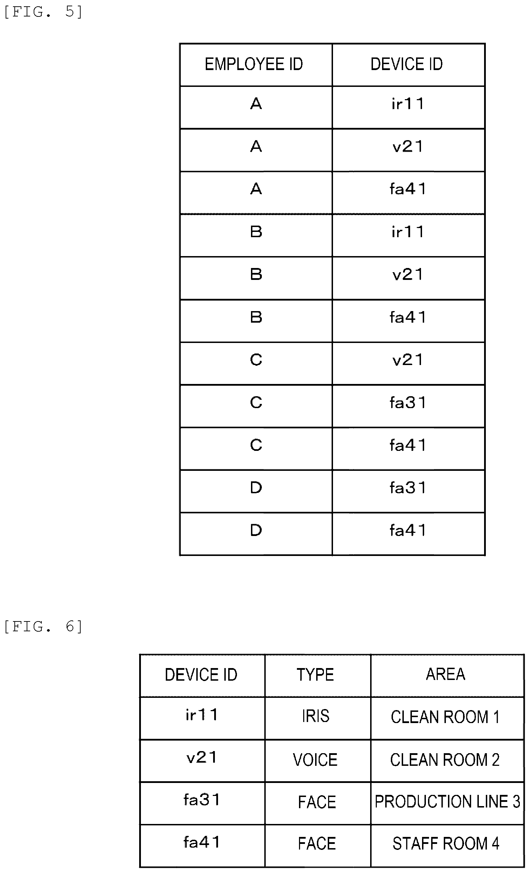

FIG. 5 is a data configuration diagram showing an example of the terminal device usage authority data.

In the terminal device usage authority data, the employee ID is associated with the device ID of the biometric information input device 21 provided in the terminal device 20 that an employee having the employee ID has the usage authority. In FIG. 5, the reference numerals (ir11, v21, fa31, fa41) shown in FIG. 1 are shown as the device IDs.

For example, an employee whose employee ID is A has the usage authority of the terminal devices T1, T2, and T4 including the biometric information input devices 21 whose device IDs are ir11, v21, and fa41.

The task server 40 determines whether a received device ID is among the device IDs corresponding to the received employee ID with reference to the terminal device usage authority data. When the task server 40 determines that the received ID exists, the task server 40 authenticates that the employee has the usage authority of the terminal device.

When the task server 40 authenticates the terminal usage authority of the employee, the task server 40 permits the terminal device 20 to log in to a manufacturing execution system 50 (MES). This makes it possible to transmit and receive manufacturing execution management data between the terminal device 20 and the manufacturing execution system 50 (MES). For example, manufacturing instruction data can be received from the manufacturing execution system 50 (MES) by the terminal device 20, and manufacturing result data can be transmitted from the terminal device 20 to the manufacturing execution system 50 (MES).

When the task server 40 authenticates the terminal usage authority of the employee, the task server 40 extracts, based on the device ID of the terminal for which the usage authority is authenticated and the employee ID of the employee, the task management data (work area and execution work) of the employee with reference to factory area data and process data stored in the task server 40. The task server 40 transmits the task management data including the extracted data and the employee ID to the manufacturing execution system 50 (MES).

In the present embodiment, the task server 40 transmits, to the manufacturing execution system 50 (MES), an authentication date and time of the authentication server 30 and an authentication date and time of the task server

40 when the usage authority of the terminal device 20 is authenticated, as the task management data of the authenticated employee.

FIG. 6 is a data configuration diagram showing an example of the factory area data stored in the task server 40.

In the factory area data, the device ID of the biometric information input device 21 provided in the terminal device 20 is associated with an area where the terminal device 20 including the biometric information input device 21 having the device ID is installed. In FIG. 6, the reference numerals (ir11, v21, fa31, fa41) shown in FIG. 1 are shown as the device IDs. In the factory area data, the device ID is associated with a type of living body in the biometric information input device 21 having the device ID.

The task server 40 extracts an area corresponding to the received device ID from the factory area data. For example, when the received device ID is ir11 (iris information input device), the task server 40 extracts the clean room 1 as a work area of the authenticated employee with reference to the factory area data.

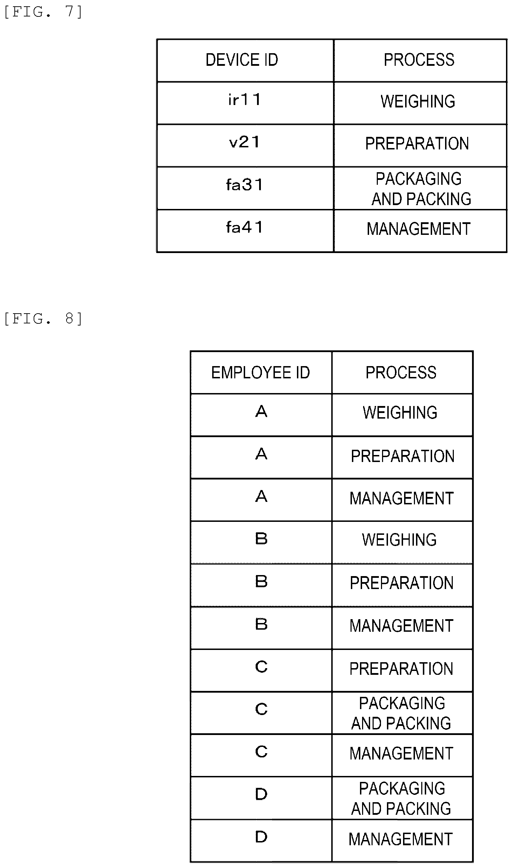

FIG. 7 is a data configuration diagram showing an example of the process data stored in the task server 40.

In the process data, the device ID of the biometric information input device 21 provided in the terminal device 20 is associated with a process in the area where the terminal device 20 including the biometric information input device 21 having the device ID is installed. In FIG. 7, the reference numerals (ir11, v21, fa31, fa41) shown in FIG. 1 are shown as the device IDs.

The task server 40 extracts a process corresponding to the received device ID from the process data. For example, when the received device ID is ir11, the task server 40 extracts weighing as the execution work of the authenticated employee with reference to the process data.

The terminal device usage authority data shown in FIG. 5 described above can be created based on data of processes each employee is in charge of transmitted from the manufacturing execution system 50 (MES) to the task server 40.

FIG. 8 is a data configuration diagram showing an example of data of tasks each employee is in charge of.

In the data of tasks each employee is in charge of, the employee ID is associated with a process the employee is in charge of.

The task server 40 creates the terminal device usage authority data based on the data of processes each employee is in charge of received from the manufacturing execution system 50 (MES) and the process data shown in FIG. 7.

This makes it possible to update the terminal device usage authority data (FIG. 5) when a process an employee is in charge of is changed according to a production plan.

As described above, the task server 40 authenticates a terminal device usage authority of an employee, based on the employee ID unique to an employee authenticated by the authentication server 30 based on the biometric information input by the biometric information input device 21 provided in the terminal device 20 and the device ID unique to the biometric information input device. Further, the task server 40 creates task management data of the authenticated employee, based on the employee ID and the device ID. The task server 40 transmits the created task management data to the manufacturing execution system 50 (MES) constituting the production management system. This makes it possible to perform accurate task management of an employee who is involved in a manufacturing process.

The manufacturing execution system 50 (MES) stores the received task management data. The manufacturing execution system 50 (MES) uses the task management data in creation processing of work instructions, work schedules, and the like, and report creation processing of work statuses and work results.

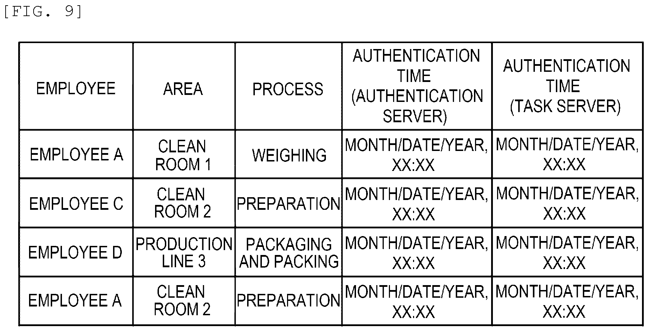

FIG. 9 is a data configuration diagram showing an example of the task management data stored in the manufacturing execution system 50 (MES).

The task management data stored in the manufacturing execution system 50 (MES) includes an employee ID, a work area, a work process, an authentication time of the authentication server 30, and an authentication time of the task server 40 when the terminal device usage authority is authenticated.

As shown in FIG. 9, the manufacturing execution system 50 (MES) stores the task management data for each authentication processing by the authentication server 30 and the task server 40.

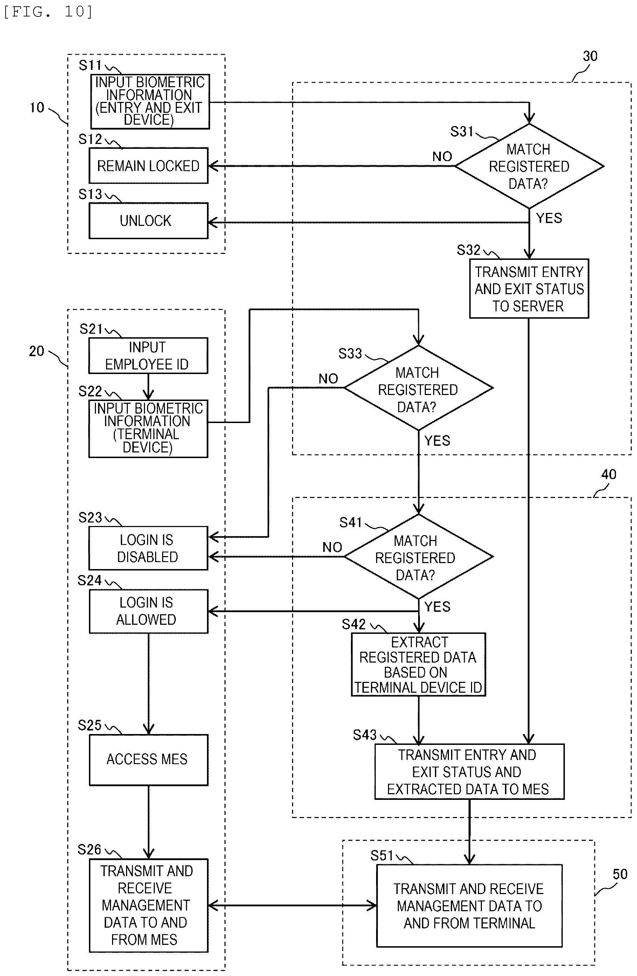

FIG. 10 is a flowchart showing the authentication processing in the authentication system (FIG. 2) according to the present embodiment.

In step S11, biometric information is input to the biometric information input device 11 for the entry and exit management device 10.

Next, in step S31, the authentication server 30 determines whether the input biometric information matches the biometric data stored in the authentication server 30, that is, registered in the authentication server 30. If the biometric information does not match the registered biometric data (NO in step S31), then step S12 is executed, and if the biometric information matches the biometric data (YES in step S31), then steps S13 and S32 are executed.

In step S12, the entry and exit management device 10 does not unlock the electric lock 12. In this case, the entry and exit management device 10 or the authentication server 30 may generate an alarm.

In step S13, the entry and exit management device 10 unlocks the electric lock 12.

In step S32, the authentication server 30 transmits the entry and exit status to the task server 40. When the entry and exit status is transmitted, then step S43 is executed.

When the electric lock is unlocked in step S13, in step S21, an employee who enters the work area inputs an employee ID to the terminal device 20. When the employee ID is input, then step S22 is executed.

In step S22, the employee inputs biometric information using the biometric information input device 21 for the terminal device 20. When the biometric information is input, then step S33 is executed.

In step S33, the authentication server 30 determines whether the input biometric information matches the biometric data (FIG. 3) stored in the authentication server 30, that is, registered in the authentication server 30. If the biometric information does not match the registered biometric data (NO in step S33), then step S23 is executed, and if the biometric information matches the biometric data (YES in step S33), then step S41 is executed.

In step S23, the terminal device 20 is disabled from logging in to the manufacturing execution system.

In step S41, the task server 40 determines whether the employee ID transmitted from the authentication server 30 and the device ID of the biometric information input device 21 match the terminal usage authority data (FIG. 5) stored in the task server 40, that is, registered in the task server 40. If the employee ID and the device ID do not match the registered terminal usage authority data (NO in step S41), then step S23 is executed, and if the employee ID and the device ID match the terminal usage authority data (YES in step S41), then steps S24 and S42 are executed.

In step S24, the terminal device 20 is allowed to log in to the manufacturing execution system.

When step S24 is executed, the terminal device 20 accesses the manufacturing execution system 50 (MES) (step S25). Further, in step S26, the terminal device 20 transmits and receives process management data related to processes in the area where the terminal device 20 is installed to and from the manufacturing execution system.

In step 42, the task server 40 extracts, based on the device ID of the biometric information input device 21 for the terminal device 20, the task management data (work area and execution work) of the employee whose terminal usage authority is authenticated from the factory area data and the process data stored in the task server 40, that is, registered in the task server 40. After executing step S42, the task server 40 executes step S43.

In step S43, the task server 40 transmits the entry and exit status received from the authentication server and the task management data extracted in step S42 to the manufacturing execution system 50 (MES).

The manufacturing execution system 50 (MES), which receives an exit status and the task management data, transmits and receives the process management data related to processes in the area where the terminal device 20 is installed to and from the terminal device 20.

As described above, the authentication system of the present embodiment authenticates a usage authority of a plurality of terminal devices 20 provided in the pharmaceutical factory 100 and configured to access the manufacturing execution system 50 provided in a production management system. The authentication system includes the biometric information input device 21 provided in each of the plurality of terminal devices 20, and the authentication server 30 configured to authenticate, based on biometric information input to the terminal device 20 from the biometric information input device 21, an employee of the pharmaceutical factory 100. The authentication system further includes a task server 40 configured to authenticate, based on a device ID (device identifier) of the biometric information input device 21, a usage authority of the terminal device 20 when the authentication server 30 authenticates the employee. The task server 40 creates task management data of the employee whose usage authority of the terminal device 20 is authenticated based on the device ID, and transmits the created task management data to the manufacturing execution system 50.

According to the authentication system of the present embodiment, the terminal device usage authority of the employee authenticated by the biometric authentication is authenticated based on the device ID of the biometric information input device for inputting the biometric information for authenticating the employee by the authentication server 30, and the task management data of the employee whose terminal usage authority is authenticated is created based on the device ID. That is, the terminal device usage authority of the employee authenticated by the biometric authentication with high reliability is authenticated based on the device ID of the biometric information input device used for biometric authentication, and the task management data of the employee is further created based on the device ID. This improves the reliability of the task management data, making it possible to perform accurate task management of an employee who is involved in a manufacturing process.

The invention is not limited to the embodiment described above and includes various modifications. For example, the embodiment described above has been described in detail to facilitate understanding of the invention, and the invention is not necessarily limited to those including all the described configurations. A part of the configurations of the embodiment may be deleted, added to another configuration, or replaced with another configuration.

For example, the authentication system according to the invention can be applied not only to the pharmaceutical factory described above but also to various manufacturing factories including a production management system, such as semiconductor manufacturing factories. The authentication system according to the invention can be applied not only to the manufacturing industry but also to the service industry.

The living body used for authentication may be a finger vein or a palm vein.

The task management data may be transmitted not only to the manufacturing execution system but also to other systems that constitute the production management system, such as a production planning system.

### Reference Signs List

1 clean room
2 clean room
3 production line
4 staff room
10 entry and exit management device
11 biometric information input device
12 electric lock
20 terminal device
21 biometric information input device
30 authentication server
40 task server
50 manufacturing execution system
f1, f2, f3, f4, f5 fingerprint information input device
fa31, fa41 facial information input device
ir11 iris information input device
v21 voice information input device
lock1, lock2, lock3, lock4, lock5 electric lock

## Claims

1. An authentication system that authenticates a usage authority of a plurality of terminal devices provided in an office and configured to access a management system, the authentication system comprising:
a biometric information input device provided in each of the plurality of terminal devices;
a first server configured to authenticate, based on biometric information input to the terminal device from the biometric information input device, an employee of the office; and
a second server configured to authenticate, based on a device identifier of the biometric information input device, a usage authority of the terminal device when the first server authenticates the employee, wherein
the second server creates task management data of the employee whose usage authority of the terminal device is authenticated based on the device identifier, and transmits the created task management data to the management system.

2. The authentication system according to claim 1, wherein
the second server stores data indicating a correspondence between an employee identifier of the employee in the office and the device identifier of the biometric information input device provided in the terminal device used in a work the employee is in charge of, and
authenticates the usage authority of the terminal device with reference to the data.

3. The authentication system according to claim 1, wherein
the second server stores data indicating a correspondence between a plurality of areas in the office, a plurality of works in the plurality of areas, and the plurality of device identifiers of the plurality of biometric information input devices provided in the plurality of terminal devices, and
creates the task management data based on the data.

4. The authentication system according to claim 3, wherein
the task management data is a work place and an execution work of the authenticated employee.

5. The authentication system according to claim 1, wherein
the task management data includes a date and time when the second server authenticates the usage authority.

6. The authentication system according to claim 1, wherein
the second server transmits the task management data to the management system, and
the management system executes any one of work instruction creation processing, work schedule creation processing, work status report creation processing, and work result report creation processing using the received task management data.

7. The authentication system according to claim 1, wherein
the biometric information input device is any one of a fingerprint information input device, a facial information input device, an iris information input device, a voice information input device, a finger vein information input device, and a palm vein information input device, depending on work clothes or a protector worn by the employee.

8. The authentication system according to claim 1, further comprising
an entry and exit management device by biometric authentication, wherein
when the first server authenticates the employee in the office by the biometric authentication, the first server unlocks an electric lock provided in the entry and exit management device.

9. The authentication system according to claim 8, wherein
the first server transmits an entry and exit status of the employee authenticated by the biometric authentication to the second server, and
the second server transmits the entry and exit status to the management system.

10. An authentication method for authenticating a usage authority of a plurality of terminal devices provided in an office and configured to access a management system, the authentication method comprising:
authenticating an employee of the office based on biometric information received from a biometric information input device provided in each of the plurality of terminal devices;
then authenticating, based on a device identifier of the biometric information input device, the usage authority of the terminal device; and
then creating task management data of the employee whose usage authority of the terminal device is authenticated based on the device identifier.
